# EUROPEAN PATENT SPECIFICATION

(11) **EP 0 683 982 B1**
(45) Date of publication and mention of the grant of the patent: **08.11.2000**
(21) Application number: 95201033.8
(22) Date of filing: 22.04.1995
(51) Int. Cl.: A21D 13/08, A21D 2/26

(54) **A bakery product with a high yoghurt content**
Bäckereiprodukt mit einem hohen Gehalt an Yoghurt
Produit de boulangerie avec une haute teneur en yoghourt

(30) Priority: 23.05.1994 IT MI941039
(43) Date of publication of application: 29.11.1995
(73) Proprietor: BARILLA ALIMENTARE S.P.A., 43100 Parma (IT)
(72) Inventor: Morbarigazzi, Nadia, I-43100 Parma (IT); Guarneri, Roberto, I-43100 Parma (IT)
(74) Representative: Perani, Aurelio

(56) References cited:
- EP-A- 0 189 348
- DE-A- 3 105 821
- DE-A- 4 202 267
- GB-A- 440 790
- RASIC ET AL. 'YOGHURT' 1987 , TECHNICAL DAIRY PUBLISHING HOUSE , COPENHAGEN, DENMARK 145590 * page 358, line 22 - page 359, line 14 * * page 360, line 25 - line 34 *

## Description

The present invention relates in general to so-called naturally-leavened bakery products having a moisture value of between 15 and 25% by weight.

More particularly, the invention relates to a filled or unfilled bakery product comprising yogurt as a characterizing ingredient.

It is well known that constant research has been in progress for some time in the bakery products sector of the confectionery industry, with the aim of enriching the products, particularly from the point of view of health and nutrition.

The number and nature of the problems which the researcher has to confront when, having identified the optimal enrichment ingredients and having identified the most appropriate and most balanced "recipe" from the nutritional and organoleptic points of view, he has to incorporate them in the basic flour-water-yeast mixture, are also known. These problems are always increased by the need, which is typical in the food industry, for a high production rate with the most conventional possible plant and equipment.

It is also known that, of the many nutritious and healthy ingredients for enriching the bakery products, yogurt currently enjoys particular favour, owing to its recognized properties.

With reference to yogurt in particular, however, there is a limit to the quantity thereof which can be associated with a bakery product (for example a snack) of the type considered and, in spite of the numerous and repeated attempts made to this end, this limit has not up to now been overcome.

In fact, according to a technique well-established in the field, in order to associate yogurt with a bakery product, it was initially incorporated in a filling cream which, in order to retain the organoleptic qualities of the final product and, in particular, in order not to have an excessively "acid flavour", had to contain no more than 15-18% by weight of yogurt.

On account of the fact that the dough/filling cream ratio in conventional bakery products may vary within the range of 70/30-80/20, and that the percentage of 4-5% by weight of yogurt in the final product was consequently too low to be significant from a nutritional and organoleptic point of view, the incorporation of yogurt in the dough was then also considered, but it was reluctantly observed that it was not possible to incorporate yogurt in quantities greater than 5-6% by weight relative to the weight of the dough.

In fact, for quantities of yogurt greater than 5-6%, it has always been found, that in the proving and baking stages, there is a substantial collapse of the structure of the dough with all the recognized adverse effects on the quality of the final product, including the visual effect of a failure to achieve the desired shape. The finished product is in fact always flattened and/or stiff and, in any case, not acceptable for putting on the market.

DE-A-42 02 267 discloses a composition of a dough comprising yogurt powder (5-25%), sweetener, vegetal fat, starch, soya semolina, egg white, acidifer, emilsifying agent and, optionally, other additives.

GB-A-440 790 discloses a biscuit of porous texture composed by superposed criss-crossed united layer of numerous, thread-like and substantially parallel filaments.

The problem upon which the present invention is based is therefore that of providing a bakery product in which the dough has a structure such that it can accept quantities of yogurt greater than the limit which has been allowed up to now, of 5-6% by weight relative to the weight of dough, without thereby having any effect comparable to a structural collapse upon proving and baking or after a prolonged shelf life.

It is known that the so-called "structure" of a dough is due to the firmness of the respective gluten network, that is, the network formed by the gluten which is present in the flour selected to produce the dough.

It has now surprisingly been discovered that yogurt prevents the formation of the gluten network and even has a destructuring effect on the network, this effect being directly proportional to the quantity of yogurt incorporated in the original dough and becoming significant precisely with yogurt values greater than 5-6%.

The concept of the solution to the aforesaid technical problem is that of effectively increasing the reticulation of the gluten network of the dough so as to render the destructuring effect exerted thereon by the yogurt incorporated in the original mixture completely irrelevant for the purposes of the structural stability of the finished product.

On the basis of this concept, the technical problem set out above is solved, according to the invention, by a bakery product, characterized in that it comprises a naturally-leavened dough having a moisture content of 15-25% by weight, produced from a multi-layered sheet of rolled dough with crossed layers and incorporating a quantity of more than 10% by weight of yogurt.

The expression: multi-layered sheet with crossed layers, is intended essentially to define the result of the so-called turning and rolling technique applied to a sheet of rolled dough, according to which technique, a sheet of rolled dough folded into several superimposed layers is rolled and the resulting rolled sheet, which in turn is folded into several superimposed layers, is rolled in a direction transverse the previous rolling, and so on for a predetermined and preferred number of times.

By such an operation, the gluten chains of the dough are "crossed" several times with an increased reticulation (mechanical cross-linking) effect on the gluten network.

It has been found that, in order for the structure of the bakery product of the invention to be essentially unaffected by the yogurt incorporated therein, the number of crossed layers of the multi-layered rolled sheet from which the product is formed must be proportional to the quantity of yogurt present therein.

It has been found that, for quantities of from 12 to 30% of yogurt relative to the weight of the final product, the number of crossed layers of the multi-layered sheet of rolled dough is advantageously and preferably between 250 and 1500.

The main advantage achieved by the present invention is constituted by the considerable quantities of yogurt which can be incorporated in the dough "portion" of a bakery product, which quantities may even render superfluous the use of a yogurt filling, which is currently provided in order to achieve appreciable quantities of yogurt from the nutritional and health points of view.

Another important advantage is constituted by the fact that the structure of the bakery product of this invention is thus "stable" and strong so that it can be proved and baked, keeping its shape, without the use of moulds. The range of bakery products which can be produced by the teaching of this invention is consequently advantageously enlarged from the point of view of the shape and presentation of the products.

According to a preferred aspect of the invention, fresh yogurt and, even more advantageously, fresh yogurt with fruit, is used.

Naturally, the bakery product of the invention may be filled with cream of preferred composition: in particular yogurt creams in which the yogurt content may vary up to 15-18% by weight relative to the weight of the cream may advantageously, but not exclusively, be used.

In a yogurt cream filling, the ratio by weight between the dough and the cream in the finished product will preferably vary within the range of from 72/28 to 83/17.

The characteristics and advantages of the invention will become clearer from the following examples of its implementation in which all the parts are parts by weight unless indicated otherwise.

### EXAMPLE 1

A mixture based on flour, water, yeast and egg yolks was prepared by a wholly conventional technique. During the kneading stage, a quantity of 20% by weight of fresh yogurt relative to the weight of the dough was incorporated.

After a suitable kneading time, the mixture was extruded, again by a conventional technique, producing a sheet of dough which was subjected to multi-layering.

In particular, the sheet of dough was layered with a total of 520 crossed layers, by a turning and rolling technique carried out in four successive stages.

From the multi-layered sheet of rolled dough thus obtained, which had a thickness of about 8 mm, pieces of sheet with dimensions predetermined according to the snacks to be produced were formed by longitudinal and transverse cutting.

These pieces of multi-layered rolled sheet incorporating yogurt were proved in controlled conditions at a temperature of from 30-32°C and a relative humidity R.H. of 85-90% with a proving time of about 2 hours.

After conventional glazing of the surface with diluted egg applied by a brush system, the proved pieces were baked in the oven at a temperature of 180-200°C, remaining in the oven for about 15-20 minutes.

It should be noted that, by virtue of the particularly accentuated reticulation of the gluten network in the multi-layered rolled dough sheet, the pieces of dough could confront the proving and baking stages without being loaded into suitable moulds beforehand.

All of the snacks thus produced had a particularly soft and uniform texture, in spite of the high yogurt content (20% by weight relative to the weight of the dough) with a middling moisture content (about 18%), and all of them kept for a long time (2-3 months).

### EXAMPLE 2

A mixture based on flour, water, yeast and egg yolks, incorporating a quantity of 12% by weight of the weight of freshly prepared yogurt relative to the weight of the mixture was prepared.

The sheet produced by extrusion was layered by the turning and rolling technique to comprise 260 crossed layers.

The sheet of multi-layered rolled dough thus produced, which had a thickness of 8-9 mm, was then cut longitudinally to produce a plurality of continuous slices of rolled sheet about 26-28 cm wide.

After they had been spaced apart, the individual slices of rolled sheet passed through a controlled proving chamber at a temperature of 30-32°C and a relative humidity of 80-85%, in which they remained for a period of about 2 hours.

After proving and suitable surface glazing with diluted egg applied by a brush system, the proved slices went on to be baked in a band oven. The temperature of the oven was controlled within a range of 180-200°C and the slices remained in the oven for 15-20 minutes.

When they had come out of the oven and cooled, the products thus produced were cut in half longitudinally and, after one of the two portions had been turned over, the other was suitably filled with a predetermined measure of a yogurt cream prepared separately.

In particular and preferably, this cream contained 17-18% of freshly-prepared yogurt and between 7 and 11% by weight of dried fruit relative to the weight of the filling, most preferably, 9% by weight of dried fruit, corresponding to about 40% of fresh fruit.

The two portions of dough were then brought together again and sliced transversely to produce yogurt-filled snacks in which the yogurt was present both in the dough and in the filling.

The products obtained in this case also kept for a long time (2-3 months) and all of them had a particularly soft and uniform texture, in spite of the presence of destructuring elements such as yogurt and fruit.

### EXAMPLE 3

Example 1 was repeated, except that a quantity of freshly-prepared yogurt equal to 30% by weight of the dough was incorporated in the initial mixture and that the turning and rolling was continued for several successive stages to produce a sheet of multi-layered rolled dough comprising 1500 crossed layers.

The product obtained after proving and baking constituted a snack which could also be filled with yogurt cream but which could be eaten as it was, owing to the high yogurt content of the dough.

In this case the snack also had a particularly pleasing texture and a durability or shelf life extending to 2-3 months.

## Claims

1. A bakery product, characterized in that it comprises a naturally-leavened dough having a moisture content of 15-25% by weight, produced from a multi-layered sheet of rolled dough with crossed layers and incorporating a quantity of more than 10% by weight of yogurt.

2. A bakery product according to Claim 1, characterized in that the quantity of yogurt present is from 10 to 30% by weight.

3. A bakery product according to Claim 2, characterized in that the multi-layered rolled dough comprises from 250 to 1500 crossed layers.

4. A bakery product according to Claim 3, characterized in that the yogurt is freshly-prepared yogurt.

5. A bakery product according to Claim 3, characterized in that it also comprises a yogurt cream filling.

6. A bakery product according to Claim 5, characterized in that the filling comprises freshly-prepared yogurt and fruit.

7. A bakery product according to Claim 6, characterized in that the fruit is dried fruit which is present in quantities of between 7 and 11% by weight relative to the weight of the filling.

8. A bakery product according to any one of the preceding claims, characterized in that it is produced by proving and baking without the use of moulds.

## Patentansprüche

1. Backprodukt,
**dadurch gekennzeichnet, daß**
es einen natürlich aufgehen gelassenen Teig mit einem Feuchtigkeitsanteil von 15 bis 25 Gew.-% besitzt, der aus einer mehrschichtigen Platte eines gewalzten Teiges mit Querschichten hergestellt wurde und einen Anteil von mehr als 10 Gew.-% Joghurt enthält.

2. Backprodukt nach Anspruch 1, dadurch gekennzeichnet, daß der Joghurt-Anteil zwischen 10 und 30 Gew.-% beträgt.

3. Backprodukt nach Anspruch 2, dadurch gekennzeichnet, daß der zu mehreren Schichten gewalzte Teig zwischen 250 und 1.500 Querschichten enthält.

4. Backprodukt nach Anspruch 3, dadurch gekennzeichnet, daß der Joghurt ein frisch hergestellter Joghurt ist.

5. Backprodukt nach Anspruch 3, dadurch gekennzeichnet, daß es auch eine Joghurt-Creme-Füllung enthält.

6. Backprodukt nach Anspruch 5, dadurch gekennzeichnet, daß die Füllung frisch hergestellten Joghurt und Früchte enthält.

7. Backprodukt nach Anspruch 6, dadurch gekennzeichnet, daß als Früchte getrocknete Früchte vorgesehen sind, die in einer Menge zwischen 7 und 11 Gew.-% bezogen auf das Gewicht der Füllung vorgesehen sind.

8. Backprodukt nach einem der vorhergehenden Ansprüche, dadurch gekennzeichnet, daß es durch Gehenlassen und Backen ohne die Verwendung von Formen hergestellt ist.

## Revendications

1. Produit de boulangerie, caractérisé en ce qu'il comprend une pâte que l'on a fait lever naturellement, ayant une teneur en eau de 15 à 25 % en poids, produite à partir d'une feuille à couches multiples de pâte roulée avec des couches croisées et renfermant une quantité de plus de 10 % en poids de yoghourt.

2. Produit de boulangerie selon la revendication 1, caractérisé en ce que la quantité de yoghourt présente est de 10 à 30 % en poids.

3. Produit de boulangerie selon la revendication 2, caractérisé en ce que la pâte roulée à couches multiples comprend de 250 à 1500 couches croisées.

4. Produit de boulangerie selon la revendication 3, caractérisé en ce que le yoghourt est du yoghourt fraîchement préparé.

5. Produit de boulangerie selon la revendication 3, caractérisé en ce qu'il comprend également un fourrage de crème de yoghourt.

6. Produit de boulangerie selon la revendication 5, caractérisé en ce que le fourrage comprend du yoghourt fraîchement préparé et des fruits.

7. Produit de boulangerie selon la revendication 6, caractérisé en ce que les fruits sont des fruits secs qui sont présents en des quantités comprises entre 7 et 11 % en poids relativement au poids du fourrage.

8. Produit de boulangerie selon l'une quelconque des revendications précédentes, caractérisé en ce qu'il est produit en étant éprouvé et cuit au four sans utilisation de moules.
